# EUROPEAN PATENT APPLICATION

(11) **EP 4 589 583 A1**
(43) Date of publication of application: **23.07.2025**
(21) Application number: 23869726.2
(22) Date of filing: 12.06.2023
(51) Int. Cl.: G09G 3/36

(54) **CONFIGURATION SCHEME FOR DRIVING CHIP IN DISPLAY DEVICE, AND DISPLAY DEVICE**

(30) Priority: 28.09.2022 CN 202211190705
(71) Applicant: Huawei Technologies Co., Ltd., Shenzhen, Guangdong 518129 (CN)
(72) Inventor: MIN, Yancan, Shenzhen, Guangdong 518129 (CN)
(74) Representative: Pfenning, Meinig & Partner mbB
(86) International application number: PCT/CN2023/099692
(87) International publication number: WO 2024/066477

(57) **Abstract**

Embodiments of this application provide a configuration solution of a driver chip in a display device and a display device, and relate to the field of display technologies, to resolve a problem that power consumption of a power supply of a gate driving circuit is high. The driver chip includes a first voltage boost circuit and a first voltage regulation circuit that are coupled. The driver chip is configured to be used in a low-voltage or high-voltage display device. The low-voltage display device includes a first circuit board, a first gate driving circuit, and a first direct path. The first circuit board includes a first high-voltage power supply input end, a first medium-voltage power supply input end, and a first low-voltage power supply input end. A first positive power supply voltage of the first gate driving circuit is less than a first high-voltage power supply voltage of the first high-voltage power supply input end. The configuration solution of the driver chip includes: The first voltage boost circuit is turned off. The first voltage regulation circuit directly receives the first high-voltage power supply voltage of the first high-voltage power supply input end through the first direct path, regulates the first high-voltage power supply voltage and then generates and outputs the first positive power supply voltage.

## Description

This application claims priority to Chinese Patent Application No. 202211190705.5, filed with the China National Intellectual Property Administration on September 28, 2022 and entitled "CONFIGURATION SOLUTION OF DRIVER CHIP IN DISPLAY DEVICE, AND DISPLAY DEVICE", which is incorporated herein by reference in its entirety.

### TECHNICAL FIELD

This application relates to the field of display technologies, and in particular, to a configuration solution of a driver chip in a display device and a display device.

### BACKGROUND

In recent years, display panels are developing toward high integration and low costs. One very important technology is implementation of mass production of a gate on array (gate on array, GOA) technology. A gate driving circuit is integrated on an array substrate of the display panel by using the GOA technology, eliminating the need of a gate driving integrated circuit part, and product costs can be reduced in terms of material costs and manufacturing processes.

However, in a current display device, power consumption of a power supply of a gate driving circuit formed by using the GOA technology is high, and it is difficult to meet a user requirement.

### SUMMARY

Embodiments of this application provide a configuration solution of a driver chip in a display device and a display device, to resolve a problem that power consumption of a power supply of a gate driving circuit is high.

To achieve the foregoing objective, this application uses the following technical solutions.

According to a first aspect of embodiments of this application, a configuration solution of a driver chip is provided. The driver chip may be, for example, a driver chip in a display device. The driver chip may be configured to be used in a low-voltage display device, and the driver chip may also be configured to be used in a high-voltage display device, to be compatible with an existing high-voltage display device and a new low-voltage display device.

The driver chip includes a first voltage boost circuit and a first voltage regulation circuit that are coupled, the first voltage boost circuit is configured to boost a received voltage and then transmit the boosted voltage to the first voltage regulation circuit, and the first voltage regulation circuit is configured to regulate the received voltage and then output the regulated voltage. The configuration solution includes a first configuration solution and a second configuration solution. In the first configuration solution, the driver chip is configured to be used in the low-voltage display device; the low-voltage display device includes a first circuit board, a first gate driving circuit, and a first direct path; the first circuit board includes a first high-voltage power supply input end, a first medium-voltage power supply input end, and a first low-voltage power supply input end; the first direct path is coupled to the first high-voltage power supply input end and the first voltage regulation circuit; and a first positive power supply voltage of the first gate driving circuit is less than a first high-voltage power supply voltage of the first high-voltage power supply input end. The first high-voltage power supply input end, the first medium-voltage power supply input end, the first low-voltage power supply input end, and a first control end are all coupled to the first voltage boost circuit; and the first control end is configured to receive a first control signal, to turn on and turn off the first voltage boost circuit. The first voltage boost circuit does not consume power supply voltages of the first high-voltage power supply input end, the first medium-voltage power supply input end, and the first low-voltage power supply input end. The first voltage regulation circuit directly receives the first high-voltage power supply voltage of the first high-voltage power supply input end through the first direct path, regulates the first high-voltage power supply voltage, and then generates and outputs the first positive power supply voltage to the first gate driving circuit.

In this embodiment of this application, the first voltage regulation circuit directly receives the first high-voltage power supply voltage of the first high-voltage power supply input end through the first direct path, and the first high-voltage power supply voltage does not need to pass through the first voltage boost circuit. Therefore, the first voltage boost circuit in the driver chip does not consume the first high-voltage power supply voltage, a first medium-voltage power supply voltage, and a first low-voltage power supply voltage, and the first positive power supply voltage of the first gate driving circuit is also reduced to be less than the first high-voltage power supply voltage. Therefore, a power supply efficiency loss in a process of generating the first positive power supply voltage required by the first gate driving circuit can be reduced, so that power consumption of the low-voltage display device is also reduced proportionally. In addition, a structure of the driver chip can be compatible with a driver chip in a conventional technology, so that costs of changing a process are low, compatibility is high, and implementation is easy.

In a possible implementation, the low-voltage display device further includes a first display screen, the first display screen includes a first pixel driving circuit, and the first gate driving circuit is configured to transmit a gate driving signal to the first pixel driving circuit. This is a possible application scenario.

In a possible implementation, in a process in which the driver chip performs the first configuration solution, the first control end is configured to receive the first control signal, to turn off the first voltage boost circuit. The first voltage boost circuit is turned off by using a software program, so that a structure is simple, and implementation is easy.

In a possible implementation, the driver chip includes a first register, and the first register is configured to transmit the first control signal to the first control end. This is an implementation with a simple structure.

In a possible implementation, the first direct path includes a first resistor. When the first resistor is used as the first direct path, the first resistor may be directly integrated into an existing circuit board in the conventional technology through welding or the like, to form the first circuit board in this embodiment of this application. A process is simple, implementation is easy, application scope is wide, and compatibility is high.

In a possible implementation, the first resistor includes a 0-ohm resistor. This is an implementation with a low loss.

In a possible implementation, the first direct path includes a first signal line. This is a possible implementation.

In a possible implementation, the first direct path is integrated into the driver chip. This is a possible implementation.

In a possible implementation, the first direct path is integrated into the first circuit board. This is a possible implementation.

In a possible implementation, the first circuit board further includes a first capacitor, a second capacitor, and a first reference ground voltage end. A first end of the first capacitor is coupled between the first voltage boost circuit and the first voltage regulation circuit, and a second end of the first capacitor is coupled to the first reference ground voltage end. A first end of the second capacitor is coupled between the first voltage regulation circuit and the first gate driving circuit, and a second end of the second capacitor is coupled to the first reference ground voltage end. The first capacitor and the second capacitor are used as voltage regulation capacitors, and may regulate voltages of an input end and an output end of the first voltage regulation circuit.

In a possible implementation, the driver chip includes a first pin, a second pin, a third pin, a fourth pin, and a fifth pin, the first pin is coupled to the first high-voltage power supply input end, the second pin is coupled to the first medium-voltage power supply input end, the third pin is coupled to the first low-voltage power supply input end, the fourth pin is coupled to the first direct path and the first end of the first capacitor, and the fifth pin is coupled to a first positive power supply voltage end of the first gate driving circuit and the first end of the second capacitor. This is a possible structure of the driver chip.

In a possible implementation, the driver chip further includes a negative voltage conversion circuit, a second voltage boost circuit, and a second voltage regulation circuit that are sequentially coupled in series, the negative voltage conversion circuit is configured to convert the received first high-voltage power supply voltage into a negative first high-voltage power supply voltage and transmit the negative first high-voltage power supply voltage to the second voltage boost circuit, the second voltage boost circuit is configured to boost the negative first high-voltage power supply voltage and transmit the boosted voltage to the second voltage regulation circuit, and the second voltage regulation circuit is configured to regulate the received voltage and then output the regulated voltage. The low-voltage display device further includes a second direct path, the second voltage regulation circuit is coupled to the negative voltage conversion circuit through the second direct path, and an absolute value of a first negative power supply voltage of the first gate driving circuit is less than the first high-voltage power supply voltage. The first configuration solution further includes: The negative voltage conversion circuit receives the first high-voltage power supply voltage of the first high-voltage power supply input end, converts the received first high-voltage power supply voltage into the negative first high-voltage power supply voltage, and transmits the negative first high-voltage power supply voltage to the second voltage boost circuit and the second direct circuit. The negative voltage conversion circuit, the first medium-voltage power supply input end, the first low-voltage power supply input end, and a second control end are all coupled to the second voltage boost circuit; and the second control end is configured to receive a second control signal, to turn on and turn off the second voltage boost circuit. The second voltage regulation circuit receives the negative first high-voltage power supply voltage through the second direct path, regulates the negative first high-voltage power supply voltage and then generates the first negative power supply voltage, and outputs the first negative power supply voltage to the first gate driving circuit.

The second voltage regulation circuit is directly coupled to the negative voltage conversion circuit through the second direct path, the second voltage boost circuit in the driver chip does not consume the first medium-voltage power supply voltage and the first low-voltage power supply voltage, and the absolute value of the first negative power supply voltage of the first gate driving circuit is also reduced to be less than the first high-voltage power supply voltage. Therefore, a power supply efficiency loss in a process of generating the first negative power supply voltage required by the first gate driving circuit can be reduced, so that power consumption of the low-voltage display device is also reduced proportionally. In addition, a structure of the driver chip can be compatible with the driver chip in the conventional technology, so that costs of changing a process are low, compatibility is high, and implementation is easy.

In a possible implementation, in the process in which the driver chip performs the first configuration solution, the second control end is configured to receive the second control signal, to turn off the second voltage boost circuit. The second voltage boost circuit is turned off by using a software program, so that a structure is simple, and implementation is easy.

In a possible implementation, the driver chip includes a second register, and the second register is configured to transmit the second control signal to the second control end. This is an implementation with a simple structure.

In a possible implementation, the second direct path includes a second resistor. When the second resistor is used as the second direct path, the second resistor may be directly integrated into the existing circuit board in the conventional technology through welding or the like, to form the first circuit board in this embodiment of this application. A process is simple, implementation is easy, application scope is wide, and compatibility is high.

In a possible implementation, the second resistor includes a 0-ohm resistor. This is an implementation with low power consumption.

In a possible implementation, the second direct path includes a second signal line. This is an implementation with a simple structure.

In a possible implementation, the second direct path is integrated into the driver chip. This is a possible implementation.

In a possible implementation, the second direct path is integrated into the first circuit board. This is a possible implementation.

In a possible implementation, the first circuit board further includes a third capacitor, a fourth capacitor, a fifth capacitor, and a second reference ground voltage end. A first end of the third capacitor is coupled between the negative voltage conversion circuit and the second voltage boost circuit, and a second end of the third capacitor is coupled to the second reference ground voltage end. A first end of the fourth capacitor is coupled between the second voltage boost circuit and the second voltage regulation circuit, and a second end of the fourth capacitor is coupled to the second reference ground voltage end. A first end of the fifth capacitor is coupled between the second voltage regulation circuit and the first gate driving circuit, and a second end of the fifth capacitor is coupled to the second reference ground voltage end. The third capacitor, the fourth capacitor, and the fifth capacitor are used as voltage regulation capacitors, to regulate a voltage of an output end of the negative voltage conversion circuit and voltages of an input end and an output end of the second voltage regulation circuit.

In a possible implementation, the driver chip further includes a sixth pin, a seventh pin, and an eighth pin, the sixth pin is coupled to the first end of the third capacitor and a first end of the second direct path, the seventh pin is coupled to the first end of the fourth capacitor and a second end of the second direct path, and the eighth pin is coupled to a first negative power supply voltage end of the first gate driving circuit. This is a possible structure of the driver chip.

In a possible implementation, in the second configuration solution, the driver chip is configured to be used in the high-voltage display device; the high-voltage display device includes a second circuit board and a second gate driving circuit; the second circuit board includes a second high-voltage power supply input end, a second medium-voltage power supply input end, and a second low-voltage power supply input end; and a second positive power supply voltage of the second gate driving circuit is greater than a second high-voltage power supply voltage of the second high-voltage power supply input end. The first voltage boost circuit receives the second high-voltage power supply voltage of the second high-voltage power supply input end, and a voltage of the second medium-voltage power supply input end and/or a voltage of the second low-voltage power supply input end; boosts the second high-voltage power supply voltage to generate a positive power supply voltage; and transmits the positive power supply voltage to the first voltage regulation circuit. The first voltage regulation circuit regulates the positive power supply voltage and then generates the second positive power supply voltage, and outputs the second positive power supply voltage to the second gate driving circuit. The driver chip in this embodiment of this application can be compatible with the low-voltage display device and the high-voltage display device.

In a possible implementation, in a process in which the driver chip performs the second configuration solution, the first control end is configured to receive the first control signal, to turn on the first voltage boost circuit.

In a possible implementation, an absolute value of a second negative power supply voltage of the second gate driving circuit is greater than the second high-voltage power supply voltage. The second configuration solution further includes: The negative voltage conversion circuit receives the second high-voltage power supply voltage of the second high-voltage power supply input end, converts the received second high-voltage power supply voltage into a negative second high-voltage power supply voltage, and transmits the negative second high-voltage power supply voltage to the second voltage boost circuit. The second voltage boost circuit receives the negative second high-voltage power supply voltage, and the voltage of the second medium-voltage power supply input end and/or the voltage of the second low-voltage power supply input end; boosts the negative second high-voltage power supply voltage to generate a negative power supply voltage; and transmits the negative power supply voltage to the second voltage regulation circuit. The second voltage regulation circuit regulates the negative power supply voltage and then generates the second negative power supply voltage, and outputs the second negative power supply voltage to the second gate driving circuit. The driver chip in this embodiment of this application can be compatible with the low-voltage display device and the high-voltage display device.

In a possible implementation, in the process in which the driver chip performs the second configuration solution, the second control end is configured to receive the second control signal, to turn on the second voltage boost circuit. In a possible implementation, the high-voltage display device further includes a second display screen, the second display screen includes a second pixel driving circuit, and the second gate driving circuit is configured to transmit a gate driving signal to the second pixel driving circuit. This is a possible application scenario.

According to a second aspect of embodiments of this application, a display device is provided. The display device includes a driver chip, the driver chip is configured by using the configuration solution in any implementation of the first aspect, and the display device is the low-voltage display device or the high-voltage display device in any implementation of the first aspect.

### BRIEF DESCRIPTION OF DRAWINGS

FIG. 1A is a diagram of a framework of a display device according to an embodiment of this application;
FIG. 1B is a diagram of a layout of a display device according to an embodiment of this application;
FIG. 2A is a diagram of an internal structure of a driver chip according to an embodiment of this application;
FIG. 2B is a diagram of an internal structure of another driver chip according to an embodiment of this application;
FIG. 3A is a diagram of a layout of a low-voltage display device according to an embodiment of this application;
FIG. 3B is a diagram of a structure of a first direct circuit according to an embodiment of this application;
FIG. 3C is a diagram of a structure of another first direct circuit according to an embodiment of this application;
FIG. 4 is a diagram of a layout of another low-voltage display device according to an embodiment of this application;
FIG. 5A is a diagram of a layout of still another low-voltage display device according to an embodiment of this application;
FIG. 5B is a diagram of a layout of still another low-voltage display device according to an embodiment of this application;
FIG. 6A is a diagram of a layout of still another low-voltage display device according to an embodiment of this application;
FIG. 6B is a diagram of a structure of a second direct circuit according to an embodiment of this application;
FIG. 6C is a diagram of a structure of another second direct circuit according to an embodiment of this application;
FIG. 7 is a diagram of a layout of still another low-voltage display device according to an embodiment of this application;
FIG. 8A is a diagram of a layout of still another low-voltage display device according to an embodiment of this application;
FIG. 8B is a diagram of a layout of still another low-voltage display device according to an embodiment of this application;
FIG. 9A is a diagram of a layout of a high-voltage display device according to an embodiment of this application; and
FIG. 9B is a diagram of a layout of another high-voltage display device according to an embodiment of this application.

### DESCRIPTION OF EMBODIMENTS

The following describes technical solutions in embodiments of this application with reference to the accompanying drawings in embodiments of this application. It is clear that the described embodiments are merely a part rather than all of embodiments of this application.

The terms "second", "first", and the like mentioned below are merely intended for ease of description, and shall not be understood as an indication or implication of relative importance or an implicit indication of a quantity of indicated technical features. Therefore, a feature limited by "second", "first", or the like may explicitly indicate or implicitly include one or more such features. In descriptions of this application, unless otherwise specified, "a plurality of" means two or more than two.

In addition, in embodiments of this application, the orientation terms such as "up", "down", "left", and "right" may include but are not limited to orientations of components schematically placed in the accompanying drawings. It should be understood that these orientation terms may be relative concepts. The orientation terms are used for relative description and clarification, and may vary accordingly with variations in the orientations of the components placed in the accompanying drawings.

In embodiments of this application, unless otherwise clearly specified and limited, the term "connection" should be understood in a broad sense. For example, a "connection" may be a fixed connection, a detachable connection, or an integral connection; and may be a direct connection, or may be an indirect connection through an intermediate medium. In addition, the term "coupling" may be a direct electrical connection, or may be an indirect electrical connection through an intermediate medium. The term "contact" may be direct contact, or may be indirect contact through an intermediate medium.

In embodiments of this application, "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between associated objects.

An embodiment of this application provides a display device. The display device is, for example, a consumer electronic product, a home electronic product, a vehicle-mounted electronic product, or a financial terminal product. The consumer electronic product is, for example, a mobile phone (mobile phone), a tablet computer (pad), a notebook computer, an e-reader, a personal computer (personal computer, PC), a personal digital assistant (personal digital assistant, PDA), a desktop display, an intelligent wearable product (for example, a smart watch or a smart band), a virtual reality (virtual reality, VR) terminal device, an augmented reality (augmented reality, AR) terminal device, or an uncrewed aerial vehicle. The home electronic product is, for example, a smart door lock, a television, a remote control, a refrigerator, or a small rechargeable household appliance (for example, a soy milk maker or a robot vacuum cleaner). The vehicle-mounted electronic product is, for example, a vehicle-mounted navigator or a vehicle-mounted high-density digital video disc (digital video disc, DVD). The financial terminal product is, for example, an automated teller machine (automated teller machine, ATM) or a terminal for self-service business handling.

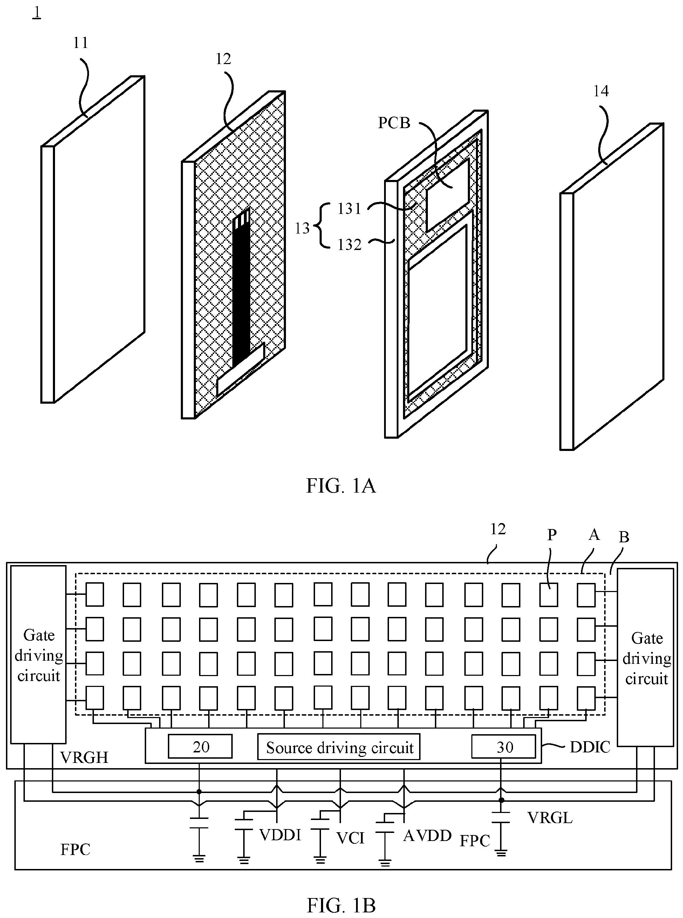

For ease of description, the following provides descriptions by using an example in which the display device is a mobile phone. As shown in FIG. 1A, a display device 1 mainly includes a cover plate 11, a display 12, a middle frame 13, and a rear housing 14. The rear housing 14 and the display 12 are respectively located on two sides of the middle frame 13, the middle frame 13 and the display 12 are disposed in the rear housing 14, the cover plate 11 is disposed on a side that is of the display 12 and that is away from the middle frame 13, and a display surface of the display 12 faces the cover plate 11.

The display 12 may be a liquid crystal display (liquid crystal display, LCD). In this case, the liquid crystal display includes a liquid crystal display panel and a backlight module. The liquid crystal display panel is disposed between the cover plate 11 and the backlight module, and the backlight module is configured to provide a light source for the liquid crystal display panel. The display 12 may alternatively be an organic light-emitting diode (organic light-emitting diode, OLED) display. Because the OLED display is a self-emissive display, no backlight module needs to be disposed.

The middle frame 13 includes a bearing plate 131 and a side frame 132 surrounding the bearing plate 131. The display device 1 may further include electronic components such as a printed circuit board (printed circuit board, PCB), a battery, and a camera. The electronic components such as the printed circuit board, the battery, and the camera may be disposed on the bearing plate 131.

As shown in FIG. 1B, the display 12 includes an active display area (active area, AA) A and a peripheral area B surrounding the active display area A.

In some embodiments, the active display area A of the display 12 is used as a display area of the display device 1, and the peripheral area B of the display 12 is used as a non-display area of the display device 1.

As shown in FIG. 1B, the active display area A of the display 12 includes a plurality of sub-pixels (sub-pixels) P. For ease of description, in this application, descriptions are provided by using an example in which the plurality of sub-pixels P are arranged in a form of a matrix. In this case, sub-pixels P arranged in a line in a horizontal direction are referred to as sub-pixels in a same row, and sub-pixels P arranged in a line in a vertical direction are referred to as sub-pixels in a same column.

The display 12 includes a display screen, and the display area A and the peripheral area B of the display 12 are used as a display area A and a peripheral area B of the display screen. The sub-pixels P in the display 12 are located in the display area A of the display screen. The sub-pixel P includes a pixel driving circuit and a light emitting unit, and the pixel driving circuit is configured to drive the light emitting unit to emit light.

The display 12 further includes a gate driving circuit and a source driving circuit that are located in the peripheral area B. The gate driving circuit is configured to provide a gate driving signal for the pixel driving circuit in the sub-pixel P, and the source driving circuit is configured to provide a source driving signal for the pixel driving circuit in the sub-pixel P.

For example, the gate driving circuit may be integrated into the display 12 by using a gate on array (gate on array, GOA) technology. The gate driving circuit includes a plurality of cascaded shift registers (shift registers, SRs).

There may be one or more gate driving circuits. For example, as shown in FIG. 1B, the display device 1 includes two gate driving circuits, and the two gate driving circuits are disposed on two sides of the active display area A in the horizontal direction. For ease of illustration, an example in which the display device 1 includes one gate driving circuit is used below for illustration.

For example, the source driving circuit may be integrated into a driver chip (display driver integrated circuit, DDIC). For example, the driver chip DDIC is directly attached to the display 12.

For example, the driver chip DDIC is coupled to the PCB through a flexible printed circuit (flexible printed circuit, FPC). Devices, such as a capacitor and a resistor, required by the driver chip DDIC are disposed on the FPC.

In a working process, the gate driving circuit needs to receive a positive power supply voltage VRGH and a negative power supply voltage VRGL that are externally input.

For example, the positive power supply voltage VRGH required by the gate driving circuit usually ranges from 5.5 V to 8.5 V, and the negative power supply voltage VRGL required by the gate driving circuit usually ranges from -11 V to -7 V.

However, the flexible printed circuit FPC usually includes a high-voltage power supply input end AVDD, a medium-voltage power supply input end VCI, and a low-voltage power supply input end VDDI. A value range of a high-voltage power supply voltage avdd transmitted by a first high-voltage power supply input end AVDD1 is 6.5 V to 8.0 V, and a typical value of the high-voltage power supply voltage avdd is 7.6 V or 6.5 V. A value range of a medium-voltage power supply voltage vci transmitted by the medium-voltage power supply input end VCI is 2.6 V to 4.0 V, and a typical value of the medium-voltage power supply voltage vci is 3.1 V. A value range of a low-voltage power supply voltage vddi transmitted by the low-voltage power supply input end VDDI is 1.6 V to 2.0 V, and a typical value of the low-voltage power supply voltage vddi is 1.8 V. Therefore, none of the high-voltage power supply input end AVDD, the medium-voltage power supply input end VCI, and the low-voltage power supply input end VDDI can directly provide a positive power supply voltage VRGH and a negative power supply voltage VRGL for the gate driving circuit.

In some embodiments, the positive power supply voltage VRGH and the negative power supply voltage VRGL are provided by the driver chip DDIC. As shown in FIG. 1B, the driver chip DDIC includes a positive power supply voltage generation circuit 20 and a negative power supply voltage generation circuit 30, where the positive power supply voltage generation circuit 20 is configured to provide the positive power supply voltage VRGH for the gate driving circuit, and the negative power supply voltage generation circuit 30 is configured to provide the negative power supply voltage VRGL for the gate driving circuit.

The driver chip DDIC receives the high-voltage power supply voltage avdd transmitted by the high-voltage power supply input end AVDD, the medium-voltage power supply voltage vci transmitted by the medium-voltage power supply input end VCI, and the low-voltage power supply voltage vddi transmitted by the low-voltage power supply input end VDDI; generates the positive power supply voltage VRGH through the positive power supply voltage generation circuit 20, and then transmits the positive power supply voltage VRGH to the gate driving circuit; and generates the negative power supply voltage VRGL through the negative power supply voltage generation circuit 30 and then transmits the negative power supply voltage VRGL to the gate driving circuit.

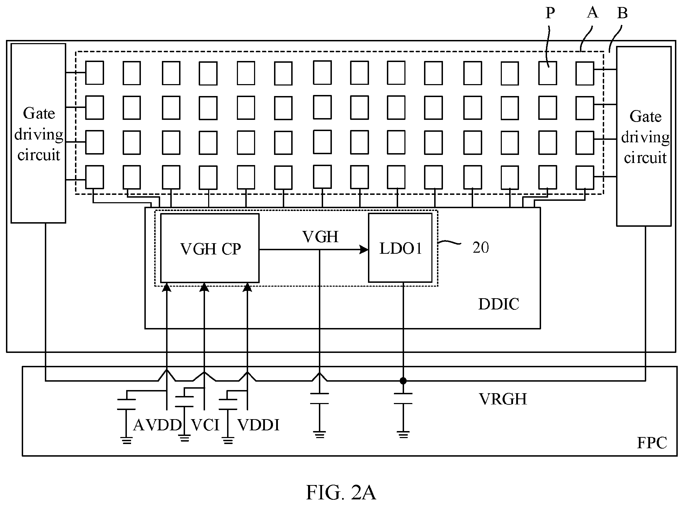

In some technologies, as shown in FIG. 2A, the positive power supply voltage generation circuit 20 includes a positive power supply generation charge pump (VGH charge pump, VGH CP) and a first low dropout linear regulator (low dropout regulator, LDO); and the positive power supply generation charge pump VGH CP is coupled in series to the first low dropout linear regulator LDO1.

The positive power supply voltage generation circuit 20 separately receives the high-voltage power supply voltage avdd of the high-voltage power supply input end AVDD, the medium-voltage power supply voltage vci of the medium-voltage power supply input end VCI, and the low-voltage power supply voltage vddi of the low-voltage power supply input end VDDI, and the positive power supply generation charge pump VGH CP boosts the received voltages to generate a positive power supply voltage VGH.

For example, the positive power supply voltage VGH=avdd+avdd/vci/vddi. For example, VGH=avdd+avdd, VGH=avdd+vci, or VGH=avdd+vddi.

Then, the first low dropout linear regulator LDO1 receives the positive power supply voltage VGH, regulates the positive power supply voltage VGH to generate the positive power supply voltage VRGH, and transmits the positive power supply voltage VRGH to the gate driving circuit.

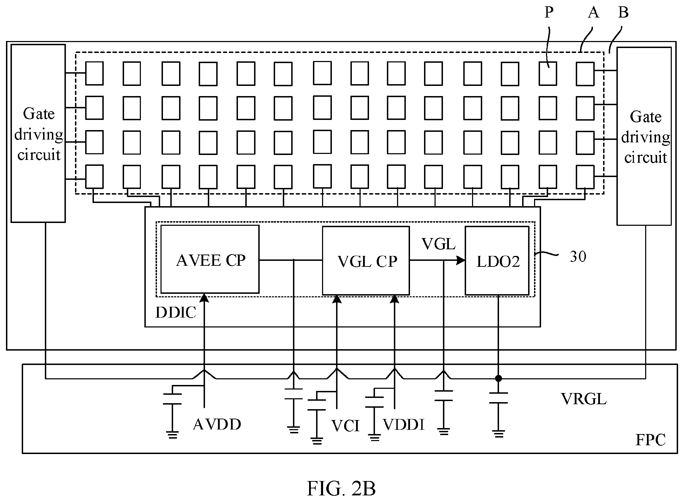

In some technologies, as shown in FIG. 2B, the negative power supply voltage generation circuit 30 includes a negative voltage conversion charge pump (AVEE charge pump, AVEE CP), a negative power supply generation charge pump (VGL charge pump, VGL CP), and a second low dropout linear regulator LDO2; and the negative voltage conversion charge pump AVEE CP, the negative power supply generation charge pump VGL CP, and the second low dropout linear regulator LDO2 are sequentially coupled in series.

The negative voltage conversion charge pump AVEE CP receives the high-voltage power supply voltage avdd of the high-voltage power supply input end AVDD, and converts the high-voltage power supply voltage avdd into a negative high-voltage power supply voltage avee. For example, the negative high-voltage power supply voltage avee=-avdd.

The negative power supply generation charge pump VGL CP receives the negative high-voltage power supply voltage avee, and the negative power supply generation charge pump VGL CP boosts the received voltage to generate a negative power supply voltage VGL.

For example, the negative power supply voltage VGL=avee-avdd/vci/vddi. For example, VGL=avee-avdd, VGL=avee-vci, or VGL=avee-vddi.

Then, the second low dropout linear regulator LDO2 receives the negative power supply voltage VGL, regulates the negative power supply voltage VGL to generate the negative power supply voltage VRGL, and transmits the negative power supply voltage VRGL to the gate driving circuit.

However, in a current technical solution, to generate the positive power supply voltage VRGH, the high-voltage power supply voltage avdd, the medium-voltage power supply voltage vci, and the low-voltage power supply voltage vddi need to be first boosted by the positive power supply generation charge pump VGH CP, and then be bucked by the first low dropout linear regulator LDO1. This causes a power supply efficiency loss of 20% to 40%. Similarly, to generate the negative power supply voltage VRGL, the high-voltage power supply voltage avdd needs to first pass through the negative voltage conversion charge pump AVEE CP, and then pass through the negative power supply generation charge pump VGL CP and the second low dropout linear regulator LDO2 together with the medium-voltage power supply voltage vci and the low-voltage power supply voltage vddi. This causes a power supply efficiency loss of 30% to 50%. Consequently, an overall power supply efficiency loss of the display device is large.

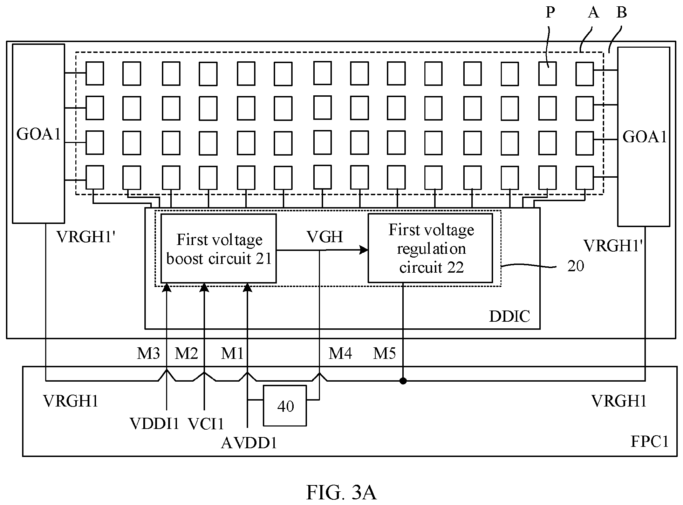

In view of this, an embodiment of this application provides a low-voltage display device. As shown in FIG. 3A, the low-voltage display device includes a first display screen, a driver chip DDIC, a first gate driving circuit GOA1, a first circuit board, and a PCB.

The first display screen may be, for example, the display screen shown above. The first gate driving circuit GOA1 is configured to provide a gate driving signal for a pixel driving circuit in the first display screen.

The first circuit board is separately coupled to the driver chip DDIC and the PCB, and is configured to implement signal interconnection between the driver chip DDIC and the PCB. The first circuit board may be, for example, an FPC, or another circuit board structure that can couple the driver chip DDIC and the PCB. For ease of description, an example in which the first circuit board is the flexible printed circuit is used below for illustration.

The first circuit board FPC1 includes a first high-voltage power supply input end AVDD1, a first medium-voltage power supply input end VCI1, and a first low-voltage power supply input end VDDI1. The first high-voltage power supply input end AVDD1 is configured to transmit a first high-voltage power supply voltage avdd1 to the driver chip DDIC, the first medium-voltage power supply input end VCI1 is configured to transmit a first medium-voltage power supply voltage vci 1 to the driver chip DDIC, and the first low-voltage power supply input end VDDI1 is configured to transmit a first low-voltage power supply voltage vddi1 to the driver chip DDIC.

The first high-voltage power supply voltage avdd1, the first medium-voltage power supply voltage vci1, and the first low-voltage power supply voltage vddi1 are relative. A voltage value of the first medium-voltage power supply voltage vci1 is greater than a voltage value of the first low-voltage power supply voltage vddi1, and is less than a voltage value of the first high-voltage power supply voltage avdd1.

In the low-voltage display device in this embodiment of this application, a value range of a first positive power supply voltage VRGH1 required by the first gate driving circuit GOA1 is less than the first high-voltage power supply voltage avdd1 of the first high-voltage power supply input end AVDD1, and a value range of an absolute value of a first negative power supply voltage VRGL1 required by the first gate driving circuit GOA1 is less than the first high-voltage power supply voltage avdd1 of the first high-voltage power supply input end AVDD1.

For example, the first positive power supply voltage VRGH1 ≤ avdd1 - 0.3 V, and the absolute value |VRGL1| of the first negative power supply voltage≤avdd1 - 0.4 V.

Two configuration solutions may be provided for the driver chip DDIC provided in this embodiment of this application. A first configuration solution may be applied to the low-voltage display device, and a second configuration solution may be applied to a high-voltage display device described below.

In the first configuration solution, the driver chip DDIC is configured to be used in the low-voltage display device, and the driver chip DDIC is configured to provide the first positive power supply voltage VRGH1 and the first negative power supply voltage VRGL1 for the first gate driving circuit GOA1. The value range of the first positive power supply voltage VRGH1 is less than the first high-voltage power supply voltage avdd1 of the first high-voltage power supply input end AVDD1, and the value range of the absolute value of the first negative power supply voltage VRGL1 is less than the first high-voltage power supply voltage avdd1 of the first high-voltage power supply input end AVDD1.

In some embodiments, as shown in FIG. 3A, the driver chip DDIC includes a positive power supply voltage generation circuit 20, and the positive power supply voltage generation circuit 20 includes a first voltage boost circuit 21 and a first voltage regulation circuit 22 that are coupled in series.

The first voltage boost circuit 21 is configured to boost a received voltage and then transmit the boosted voltage to the first voltage regulation circuit 22. The first voltage regulation circuit 22 is configured to regulate the received voltage and then output the regulated voltage. The voltage output by the first voltage regulation circuit 22 is the first positive power supply voltage VRGH1 required by the first gate driving circuit GOA1.

For example, the first voltage boost circuit 21 includes a positive power supply generation charge pump (VGH charge pump, VGH CP), and the first voltage regulation circuit 22 includes a low dropout linear regulator (low dropout regulator, LDO).

Based on this, the low-voltage display device provided in this embodiment of this application further includes a first direct path 40. Two ends of the first direct path 40 are respectively coupled to the first high-voltage power supply input end AVDD1 and the first voltage regulation circuit 22. The first direct path 40 is configured to directly transmit the first high-voltage power supply voltage avdd1 of the first high-voltage power supply input end AVDD1 to the first voltage regulation circuit 22.

In some embodiments, the driver chip DDIC includes a first pin M1, a second pin M2, a third pin M3, and a fifth pin M5.

The first pin M1 is coupled to the first high-voltage power supply input end AVDD1, the second pin M2 is coupled to the first medium-voltage power supply input end VCI1, and the third pin M3 is coupled to the first low-voltage power supply input end VDDI1. The first pin M1, the second pin M2, and the third pin M3 are all coupled to the first voltage boost circuit 21, to implement separate coupling between the first voltage boost circuit 21 and input ends, that is, the first high-voltage power supply input end AVDD1, the first medium-voltage power supply input end VCI1, and the first low-voltage power supply input end VDDI1. The first voltage boost circuit 21 is configured to receive the first high-voltage power supply voltage avdd1 of the first high-voltage power supply input end AVDD1, the first medium-voltage power supply voltage vci1 of the first medium-voltage power supply input end VCI1, and the first low-voltage power supply voltage vddi1 of the first low-voltage power supply input end VDDI1.

The fifth pin M5 is coupled to a first positive power supply voltage end VRGH1' of the first gate driving circuit GOA1, and the first voltage regulation circuit 22 is coupled to the fifth pin M5, to implement coupling between the first voltage regulation circuit 22 and the first positive power supply voltage end VRGH1'. The first voltage regulation circuit 22 is configured to output the first positive power supply voltage VRGH1 to the first positive power supply voltage end VRGH1'.

In an embodiment, the first direct path 40 is integrated into the first circuit board FPC1.

In this way, through use of an existing driver chip DDIC in a conventional technology, a driving signal can be provided for the low-voltage display device, an application scope of a configuration solution of the driver chip DDIC can be provided, and compatibility is high.

In this case, the driver chip DDIC further includes a fourth pin M4. The fourth pin M4 is coupled to an output end of the first direct path 40, and the first voltage regulation circuit 22 is coupled to the fourth pin M4, to implement coupling between the first voltage regulation circuit 22 and the first direct path 40. The first voltage regulation circuit 22 is configured to receive the first high-voltage power supply voltage avdd1 that is of the first high-voltage power supply input end AVDD1 and that is transmitted on the first direct path 40.

In some embodiments, this embodiment of this application provides a configuration solution of the driver chip DDIC in a display device. The first configuration solution includes:
The first voltage boost circuit 21 is separately coupled to the first high-voltage power supply input end AVDD1, the first medium-voltage power supply input end VCI1, and the first low-voltage power supply input end VDDI1. A first control end coupled to the first voltage boost circuit 21 is configured to receive a first control signal. The first voltage boost circuit 21 turns on and turns off the first voltage boost circuit 21 under control of the first control signal.

In a process in which the driver chip DDIC performs the first configuration solution, the first control end is configured to receive the first control signal, to turn off the first voltage boost circuit 21.

Alternatively, it is understood as that, although the first voltage boost circuit 21 is coupled to the first high-voltage power supply input end AVDD1, the first medium-voltage power supply input end VCI1, and the first low-voltage power supply input end VDDI1, in the first configuration solution, because the first voltage boost circuit 21 is in an off state, the first high-voltage power supply voltage avdd1 of the first high-voltage power supply input end AVDD1, the first medium-voltage power supply voltage vci1 of the first medium-voltage power supply input end VCI1, and the first low-voltage power supply voltage vddi1 of the first low-voltage power supply input end VDDI1 are not consumed by the first voltage boost circuit 21.

In some embodiments, a method for turning off the first voltage boost circuit 21 includes:
A first enable signal is transmitted to the first voltage boost circuit 21, and the first voltage boost circuit 21 receives the first enable signal, so that the first voltage boost circuit 21 is turned off.

For example, the driver chip DDIC includes a first register, the first register is configured to transmit the first control signal to the first voltage boost circuit 21, and the first control signal is, for example, the first enable signal.

Alternatively, for example, the driver chip DDIC includes a switch unit, the switch unit is configured to transmit the first control signal to the first voltage boost circuit 21, and the first control signal is, for example, a first turn-off signal.

In some embodiments, when the first voltage boost circuit 21 is turned off, the first voltage boost circuit 21 is configured to output a reference ground voltage to the first voltage regulation circuit 22.

The first voltage regulation circuit 22 receives the first high-voltage power supply voltage avdd1 of the first high-voltage power supply input end AVDD1 through the first direct path 40, regulates the first high-voltage power supply voltage avdd1, and then generates and outputs the first positive power supply voltage VRGH1 to the first gate driving circuit GOA1.

Alternatively, it is understood as that the first voltage regulation circuit 22 directly receives the first high-voltage power supply voltage avdd1 of the first high-voltage power supply input end AVDD1 through the first direct path 40. Therefore, the first high-voltage power supply voltage avdd1 of the first high-voltage power supply input end AVDD1 may be directly used as a positive power supply voltage VGH.

In this way, the first voltage boost circuit 21 in the driver chip DDIC does not consume the first high-voltage power supply voltage avdd1, the first medium-voltage power supply voltage vci1, and the first low-voltage power supply voltage vddi1, and the first positive power supply voltage VRGH1 of the first gate driving circuit GOA1 is also reduced to be less than the first high-voltage power supply voltage avdd1. Therefore, a power supply efficiency loss in a process of generating the first positive power supply voltage VRGH1 required by the first gate driving circuit GOA1 may be reduced from 20% to 40% in a related technology to be less than 5%. It is equivalent to improving power supply efficiency by 15% to 35%, so that power consumption of the low-voltage display device is also reduced proportionally. In addition, a structure of the driver chip DDIC can be compatible with the driver chip in the conventional technology, so that costs of changing a process are low, compatibility is high, and implementation is easy.

A structure of the first direct path 40 is not limited in this embodiment of this application, provided that the first high-voltage power supply voltage avdd1 of the first high-voltage power supply input end AVDDI1 can be transmitted to the first voltage regulation circuit 22 at a low loss.

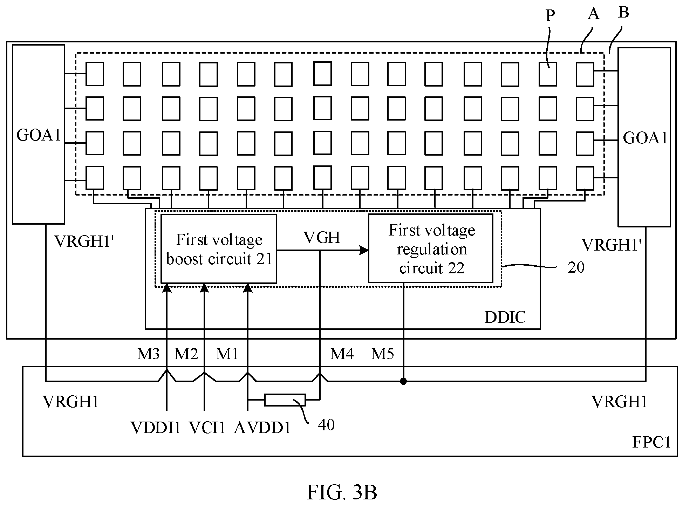

In some embodiments, as shown in FIG. 3B, the first direct path 40 includes a first resistor.

For example, the first resistor includes a 0-ohm resistor. A loss of the 0-ohm resistor is low, so that the power supply efficiency loss in a working process of the driver chip DDIC can be further reduced.

When the first resistor is used as the first direct path 40, the first resistor may be directly integrated into an existing circuit board in the conventional technology through welding or the like, to form the first circuit board FPC1 in this embodiment of this application. A process is simple, implementation is easy, application scope is wide, and compatibility is high.

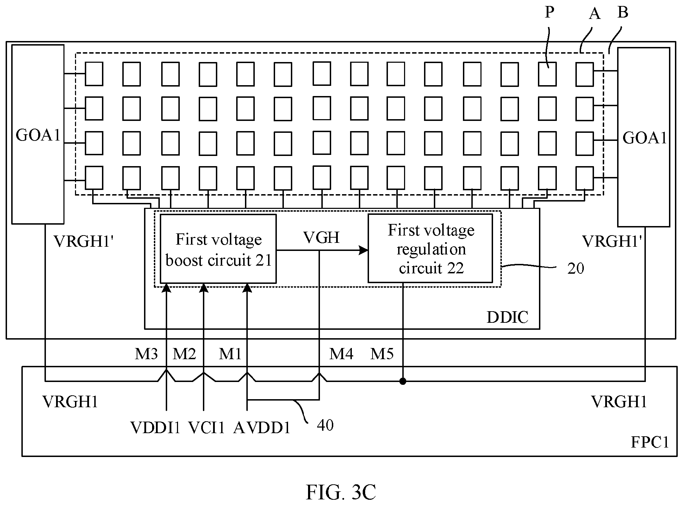

In some other embodiments, as shown in FIG. 3C, the first direct path 40 includes a first signal line.

When the first signal line is used as the first direct path 40, difficulty of forming the first signal line in the first circuit board FPC1 is low, and implementation is easy.

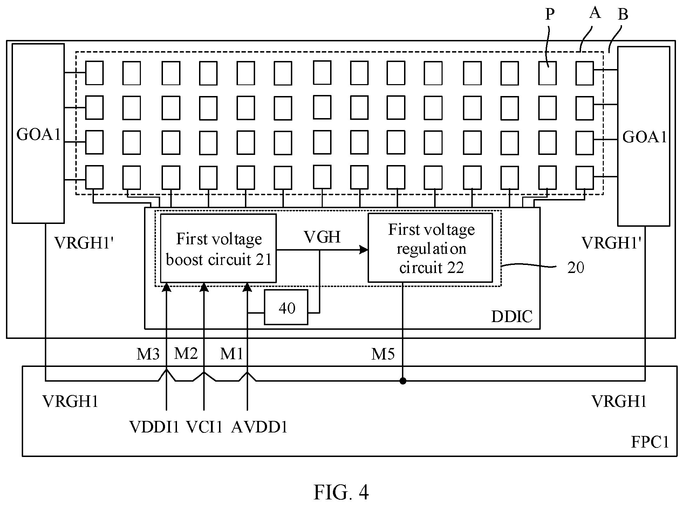

In another embodiment, as shown in FIG. 4, the first direct path 40 is integrated into the driver chip DDIC.

For example, the first direct path 40 includes a first signal line.

When the first signal line is used as the first direct path 40, difficulty of forming the first signal line in the driver chip DDIC is low, and implementation is easy. In addition, a circuit board in the related technology may be used as the first circuit board FPC1 in this embodiment of this application without changing a structure of the circuit board, and compatibility is high.

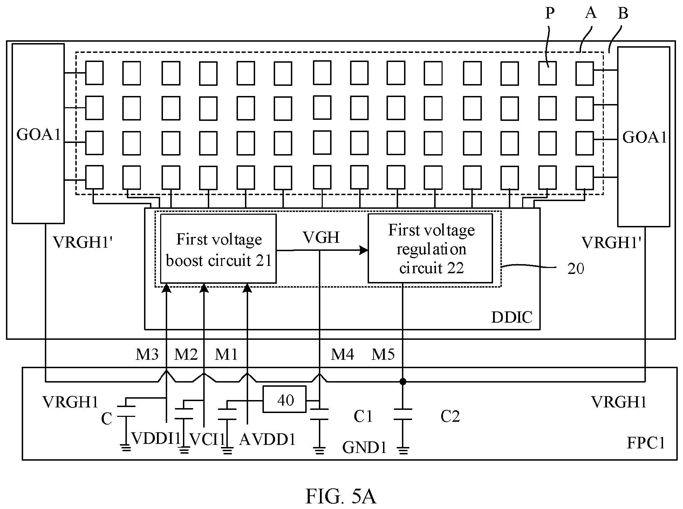

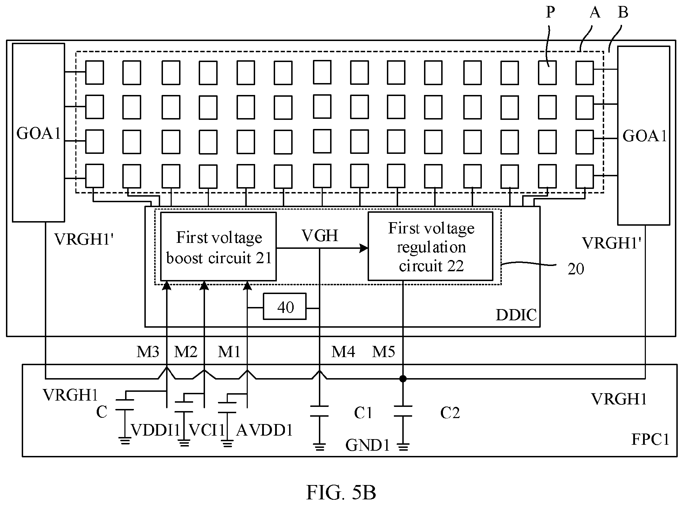

In some embodiments, as shown in FIG. 5A and FIG. 5B, the first circuit board FPC1 further includes a first capacitor C1, a second capacitor C2, and a first reference ground voltage end GND1.

A first end of the first capacitor C1 is coupled between the first voltage boost circuit 21 and the first voltage regulation circuit 22, and a second end of the first capacitor C1 is coupled to the first reference ground voltage end GND1.

A first end of the second capacitor C2 is coupled between the first voltage regulation circuit 22 and the first gate driving circuit GOA1, and a second end of the second capacitor C2 is coupled to the first reference ground voltage end GND1.

The first capacitor C1 and the second capacitor C2 are used as voltage regulation capacitors, to regulate voltages of an input end and an output end of the first voltage regulation circuit 22.

In some embodiments, as shown in FIG. 5A and FIG. 5B, the first circuit board FPC1 further includes capacitors C, where the capacitors C are separately coupled between the first reference ground voltage end GND1 and the input ends, that is, the first high-voltage power supply input end VDDI1, the first medium-voltage power supply input end VCI1, and the first low-voltage power supply input end AVDD1, and the capacitor C has a voltage regulation function.

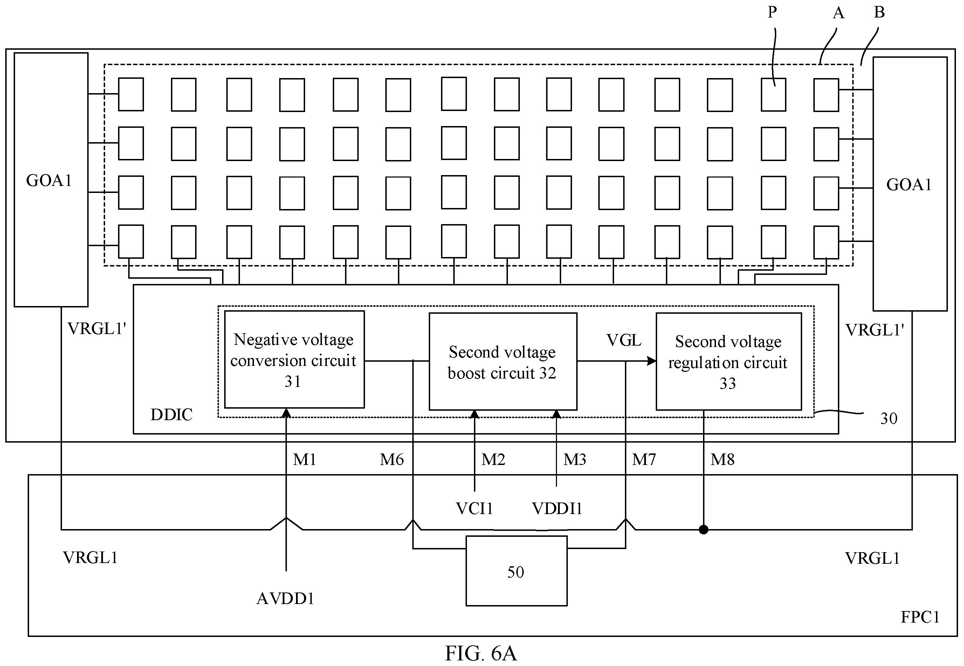

In some embodiments, as shown in FIG. 6A, the driver chip DDIC further includes a negative power supply voltage generation circuit 30, and the negative power supply voltage generation circuit 30 includes a negative voltage conversion circuit 31, a second voltage boost circuit 32, and a second voltage regulation circuit 33 that are sequentially coupled in series.

The negative voltage conversion circuit 31 is configured to convert the received first high-voltage power supply voltage avdd1 into a negative first high-voltage power supply voltage avee1 and transmit the negative first high-voltage power supply voltage avee1 to the second voltage boost circuit 32. The second voltage boost circuit 32 is configured to boost the negative first high-voltage power supply voltage avee1 and transmit the boosted voltage to the second voltage regulation circuit 33. The second voltage regulation circuit 33 is configured to regulate the received voltage and then output the regulated voltage. The voltage output by the second voltage regulation circuit 33 is the first negative power supply voltage VRGL1 required by the first gate driving circuit GOA1. The absolute value of the first negative power supply voltage VRGL1 of the first gate driving circuit GOA1 is less than the first high-voltage power supply voltage avdd1.

For example, the negative voltage conversion circuit 31 includes a negative voltage conversion charge pump (AVEE charge pump, AVEE CP), the second voltage boost circuit 32 includes a negative power supply generation charge pump (VGL charge pump, VGL CP), and the second voltage regulation circuit 33 includes a low dropout linear regulator (low dropout regulator, LDO).

Based on this, the low-voltage display device provided in this embodiment of this application further includes a second direct path 50. The second voltage regulation circuit 33 is coupled to the negative voltage conversion circuit 31 through the second direct path 50. Two ends of the second direct path 50 are coupled to the negative voltage conversion circuit 31 and the second voltage regulation circuit 33. The second direct path 50 is configured to directly transmit, to the second voltage regulation circuit 33, the negative first high-voltage power supply voltage avee1 output by the negative voltage conversion circuit 31.

In an embodiment, as shown in FIG. 6A, the second direct path 50 is integrated into the first circuit board FPC1.

In this way, through use of the existing driver chip DDIC in the conventional technology, a driving signal can be provided for the low-voltage display device, an application scope of a configuration solution of the driver chip DDIC can be provided, and compatibility is high.

In some embodiments, the driver chip DDIC further includes a sixth pin M6, a seventh pin M7, and an eighth pin M8.

The negative voltage conversion circuit 31 is coupled to the first pin M1, to implement coupling between the negative voltage conversion circuit 31 and the first high-voltage power supply input end AVDD1. The negative voltage conversion circuit 31 is configured to receive the first high-voltage power supply voltage avdd1 of the first high-voltage power supply input end AVDD1.

The sixth pin M6 is coupled to a first end of the second direct path 50, and the seventh pin M7 is coupled to a second end of the second direct path 50, to implement direct coupling between the second voltage regulation circuit 33 and the negative voltage conversion circuit 31. The eighth pin M8 is coupled to a first negative power supply voltage end VRGL1' of the first gate driving circuit GOA1. The second voltage regulation circuit 33 is configured to output the first negative power supply voltage VRGL1 to the first negative power supply voltage end VRGL1'.

The second voltage boost circuit 32 is coupled to the second pin M2 and the third pin M3, to implement coupling between the second voltage boost circuit 32 and input ends, that is, the first medium-voltage power supply input end VCI1 and the first low-voltage power supply input end VDDI1. The second voltage boost circuit 32 is configured to receive the first medium-voltage power supply voltage vci1 of the first medium-voltage power supply input end VCI1 and the first low-voltage power supply voltage vddi1 of the first low-voltage power supply input end VDDI1.

In some embodiments, the first configuration solution of the driver chip DDIC further includes:
The negative voltage conversion circuit 31 receives the first high-voltage power supply voltage avdd1 of the first high-voltage power supply input end AVDD1, converts the received first high-voltage power supply voltage avdd1 into the negative first high-voltage power supply voltage avee1, and transmits the negative first high-voltage power supply voltage avee1 to the second voltage boost circuit 32 and the second direct path 50.

The negative voltage conversion circuit 31, the first medium-voltage power supply input end VCI1, the first low-voltage power supply input end VDDI1, and a second control end are all coupled to the second voltage boost circuit 32. The second control end is configured to receive a second control signal, to turn on and turn off the second voltage boost circuit 32.

In the process in which the driver chip DDIC performs the first configuration solution, the second control end is configured to receive the second control signal, to turn off the second voltage boost circuit 32.

Alternatively, it is understood as that, although the second voltage boost circuit 32 is coupled to the negative voltage conversion circuit 31, the first medium-voltage power supply input end VCI1, and the first low-voltage power supply input end VDDI1, because the second voltage boost circuit 32 is in an off state, the first medium-voltage power supply voltage vci1 of the first medium-voltage power supply input end VCI1 and the first low-voltage power supply voltage vddi1 of the first low-voltage power supply input end VDDI1 are not consumed by the second voltage boost circuit 32.

In some embodiments, a method for turning off the second voltage boost circuit 32 includes:
A second enable signal is transmitted to the second voltage boost circuit 32, and the second voltage boost circuit 32 receives the second enable signal, so that the second voltage boost circuit 32 is turned off.

For example, the driver chip DDIC includes a second register, the second register is configured to transmit the second control signal to the second voltage boost circuit 32, and the second control signal is, for example, the second enable signal.

Alternatively, for example, the driver chip DDIC includes a switch unit, the switch unit is configured to transmit the second control signal to the second voltage boost circuit 32, and the second control signal is, for example, a second turn-off signal.

In some embodiments, when the second voltage boost circuit 32 is turned off, the second voltage boost circuit 32 is configured to output a reference ground voltage to the second voltage regulation circuit 33.

The second voltage regulation circuit 33 receives, through the second direct path 50, the negative first high-voltage power supply voltage avee1 output by the negative voltage conversion circuit 31, regulates the negative first high-voltage power supply voltage avee1 and then generates the first negative power supply voltage VRGL1, and outputs the first negative power supply voltage VRGL1 to the first negative power supply voltage end VRGL1' of the first gate driving circuit GOA1.

Alternatively, it is understood as that the second voltage regulation circuit 33 directly receives, through the second direct path 50, the negative first high-voltage power supply voltage avee1 output by the negative voltage conversion circuit 31. In this case, the negative first high-voltage power supply voltage avee1 output by the negative voltage conversion circuit 31 may be directly used as a negative power supply voltage VGL.

In this way, the second voltage boost circuit 32 does not consume the first medium-voltage power supply voltage vci1 and the first low-voltage power supply voltage vddi1, and the absolute value of the first negative power supply voltage VRGL1 of the first gate driving circuit GOA1 is also reduced to be less than the first high-voltage power supply voltage avdd1. Therefore, a power supply efficiency loss in a process of generating the first negative power supply voltage VRGL1 required by the first gate driving circuit GOA1 may be reduced from 30% to 50% in the related technology to be less than 15%. It is equivalent to improving power supply efficiency by 15% to 35%, so that power consumption of the low-voltage display device is also reduced proportionally. In addition, a structure of the driver chip DDIC can be compatible with the driver chip in the conventional technology, so that costs of changing a process are low, compatibility is high, and implementation is easy.

A structure of the second direct path 50 is not limited in this embodiment of this application, provided that the negative first high-voltage power supply voltage avee1 output by the negative voltage conversion circuit 31 can be transmitted to the second voltage regulation circuit 33 at a low loss.

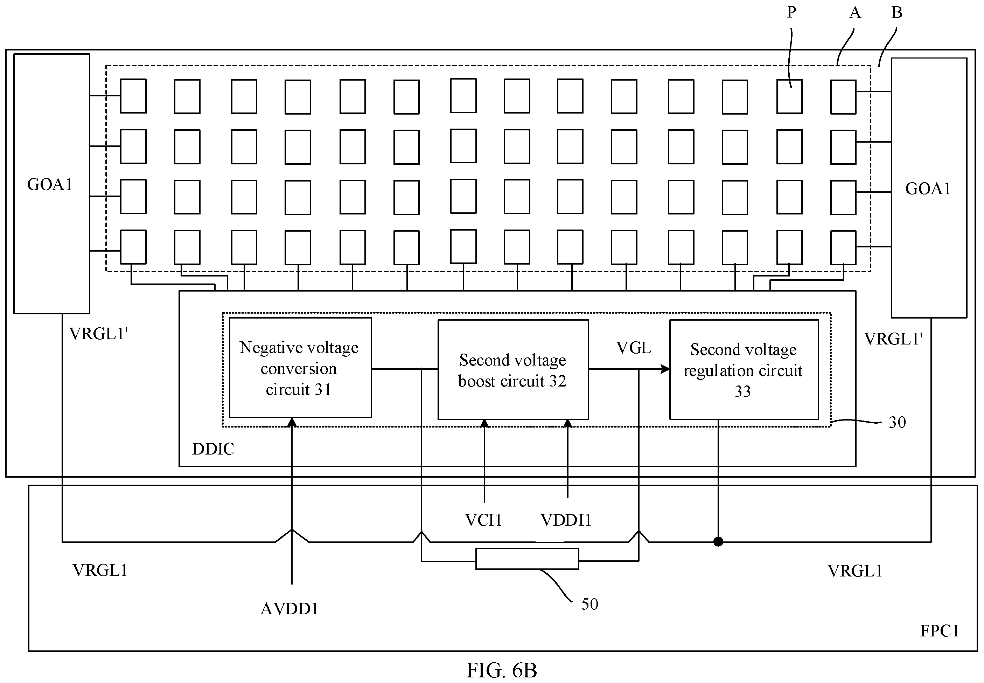

In some embodiments, as shown in FIG. 6B, the second direct path 50 includes a second resistor.

For example, the second resistor includes a 0-ohm resistor. A loss of the 0-ohm resistor is low, so that the power supply efficiency loss in the working process of the driver chip DDIC can be further reduced.

When the second resistor is used as the second direct path 50, the second resistor may be directly integrated into the existing circuit board in the conventional technology through welding or the like, to form the first circuit board FPC1 in this embodiment of this application. A process is simple, implementation is easy, application scope is wide, and compatibility is high.

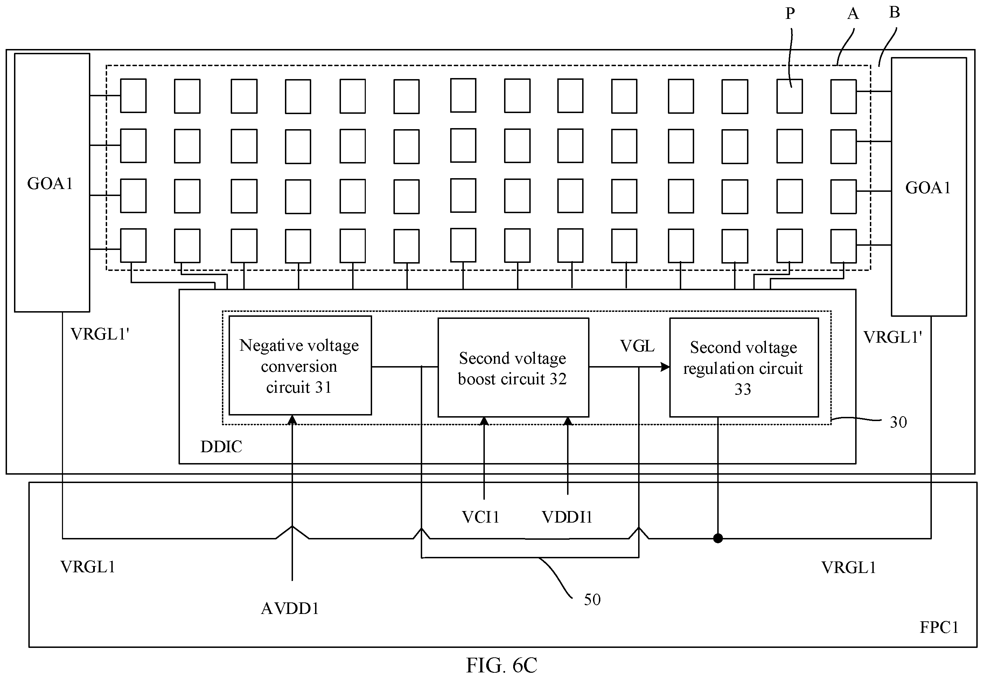

In some other embodiments, as shown in FIG. 6C, the second direct path 50 includes a second signal line.

When the second signal line is used as the second direct path 50, difficulty of forming the second signal line in the first circuit board FPC1 is low, and implementation is easy.

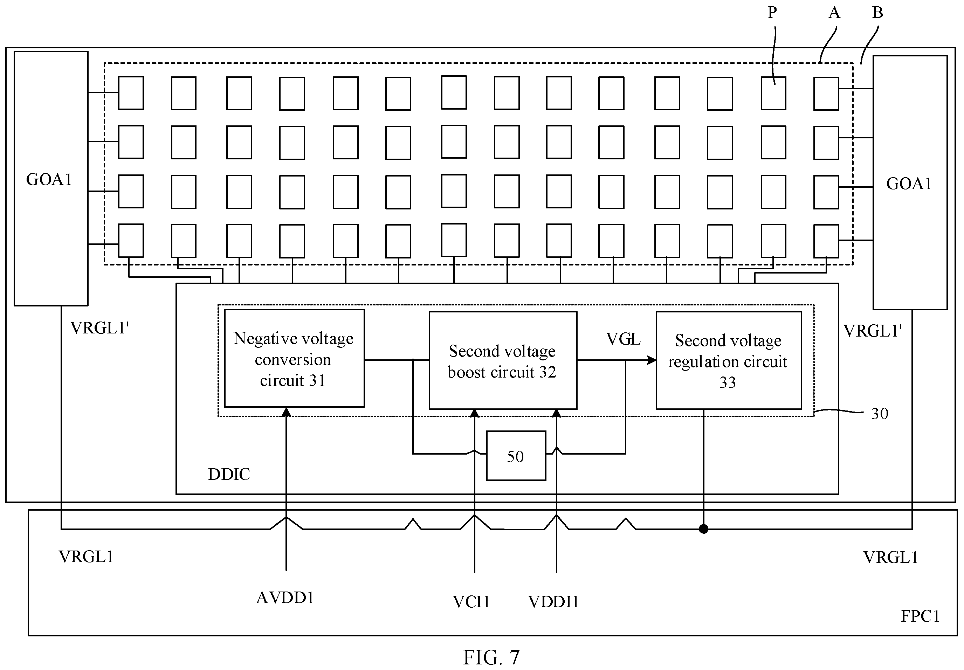

In another embodiment, as shown in FIG. 7, the second direct path 50 is integrated into the driver chip DDIC.

For example, the second direct path 50 includes a second signal line.

When the second signal line is used as the second direct path 50, difficulty of forming the second signal line in the driver chip DDIC is low, and implementation is easy. In addition, the circuit board in the related technology may be used as the first circuit board FPC1 in this embodiment of this application without changing the structure of the circuit board, and compatibility is high.

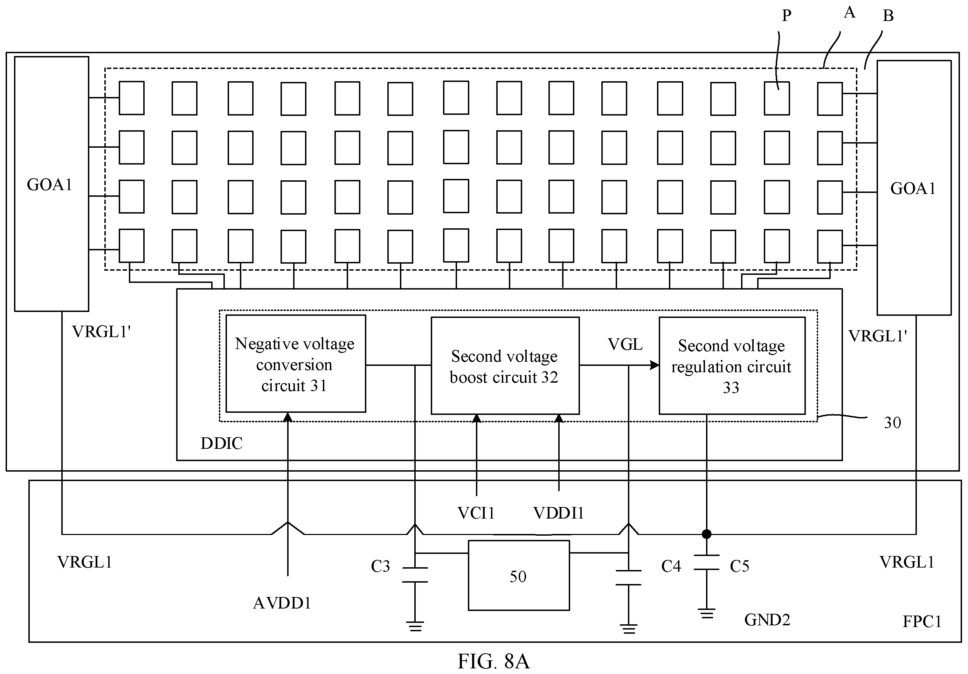

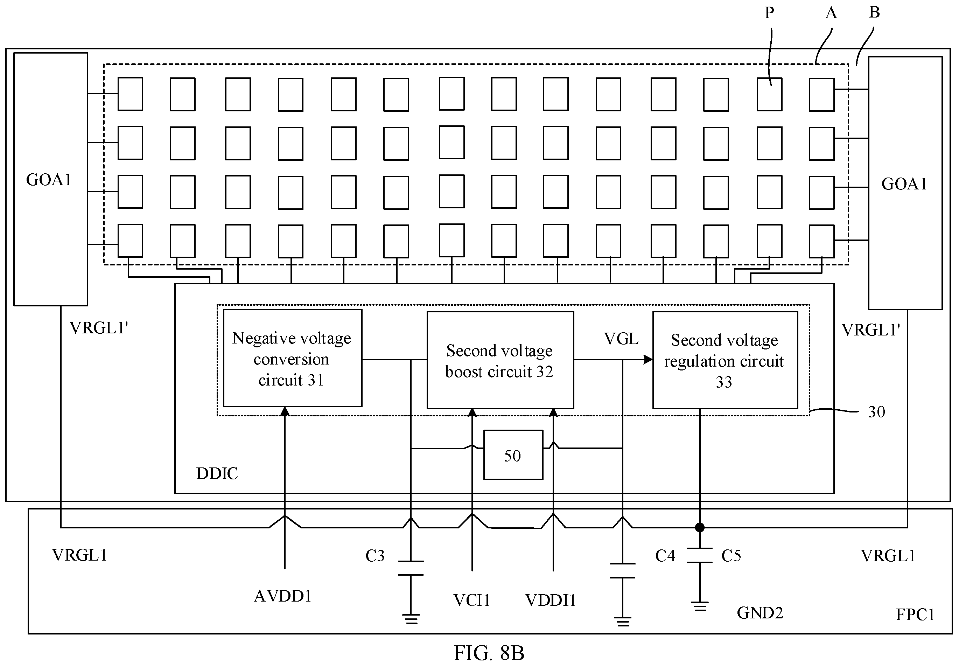

In some embodiments, as shown in FIG. 8A and FIG. 8B, the first circuit board FPC1 further includes a third capacitor C3, a fourth capacitor C4, a fifth capacitor C5, and a second reference ground voltage end GND2.

A first end of the third capacitor C3 is coupled between the negative voltage conversion circuit 31 and the second voltage boost circuit 32, and the first end of the third capacitor C3 is further coupled to the first end of the second direct path 50. For example, the third capacitor C3 is coupled to the sixth pin M6 of the driver chip DDIC, to implement the foregoing coupling. A second end of the third capacitor C3 is coupled to the second reference ground voltage end GND2.

A first end of the fourth capacitor C4 is coupled between the second voltage boost circuit 32 and the second voltage regulation circuit 33, and the first end of the fourth capacitor C4 is further coupled to the second end of the second direct path 50. For example, the first end of the fourth capacitor C4 is coupled to the seventh pin M7, to implement the foregoing coupling of the fourth capacitor C4. A second end of the fourth capacitor C4 is coupled to the second reference ground voltage end GND2.

A first end of the fifth capacitor C5 is coupled between the second voltage regulation circuit 33 and the first gate driving circuit GOA1, and a second end of the fifth capacitor C5 is coupled to the second reference ground voltage end GND2.

The third capacitor C3, the fourth capacitor C4, and the fifth capacitor C5 are used as voltage regulation capacitors, to regulate a voltage of an output end of the negative voltage conversion circuit 31 and voltages of an input end and an output end of the second voltage regulation circuit 33.

The first reference ground voltage end GND1 and the second reference ground voltage end GND2 may be, for example, a same reference ground voltage end.

In some embodiments, certainly, the first circuit board FPC1 may further include the capacitors C, where the capacitors C are separately coupled between the first reference ground voltage end GND1 and the input ends, that is, the first high-voltage power supply input end VDDI1, the first medium-voltage power supply input end VCI1, and the first low-voltage power supply input end AVDD1, and the capacitor C has the voltage regulation function. The capacitor C is not shown in FIG. 8A and FIG. 8B.

The driver chip provided in this embodiment of this application may alternatively be configured to be used in the high-voltage display device. Certainly, the high-voltage display device herein is relative to the low-voltage display device, and a voltage signal required by the gate driving circuit of the low-voltage display device is smaller than a voltage signal required by a gate driving circuit of the high-voltage display device.

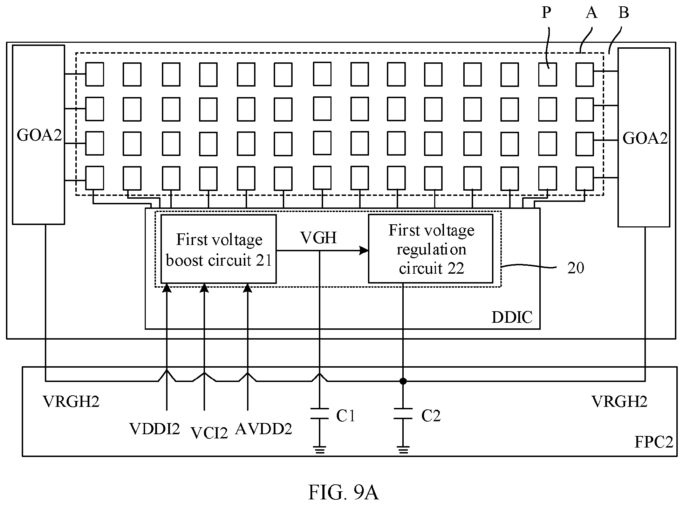

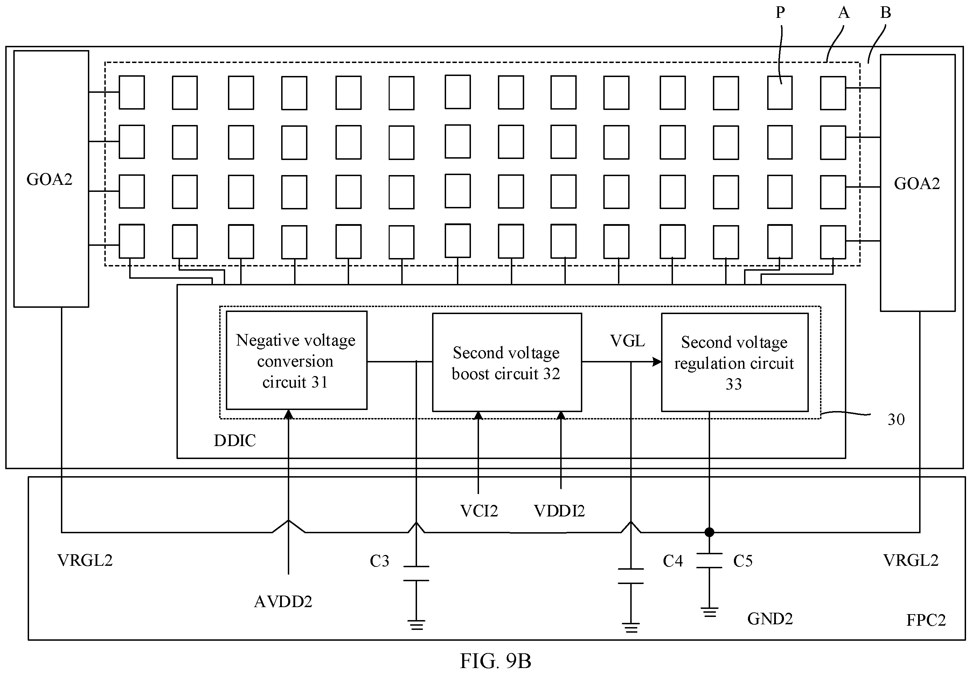

As shown in FIG. 9A and FIG. 9B, the high-voltage display device includes a second display screen, a driver chip DDIC, a second circuit board FPC2, and a second gate driving circuit GOA2.

The second display screen may be, for example, the foregoing display screen, and the driver chip DDIC may be, for example, the driver chip DDIC in the low-voltage display device.

The second circuit board FPC2 includes a second high-voltage power supply input end AVDD2, a second medium-voltage power supply input end VCI2, and a second low-voltage power supply input end VDDI2. The second gate driving circuit GOA2 is configured to provide a gate driving signal for a pixel driving circuit in the second display screen, where a second positive power supply voltage VRGH2 of the second gate driving circuit GOA2 is greater than a second high-voltage power supply voltage avdd2 of the second high-voltage power supply input end AVDD2.

The second high-voltage power supply input end AVDD2 is configured to transmit the second high-voltage power supply voltage avdd2 to the driver chip DDIC, the second medium-voltage power supply input end VCI2 is configured to transmit a second medium-voltage power supply voltage vci2 to the driver chip DDIC, and the second low-voltage power supply input end VDDI2 is configured to transmit a second low-voltage power supply voltage vddi2 to the driver chip DDIC.

For example, a value of the voltage transmitted by the second high-voltage power supply input end AVDD2 is equal to the value of the voltage transmitted by the first high-voltage power supply input end AVDD1, a value of the voltage transmitted by the second medium-voltage power supply input end VCI2 is equal to the value of the voltage transmitted by the first medium-voltage power supply input end VCI1, and a value of the voltage transmitted by the second low-voltage power supply input end VDDI2 is equal to the value of the voltage transmitted by the first low-voltage power supply input end VDDI1.

In the high-voltage display device in this embodiment of this application, a value range of the second positive power supply voltage VRGH2 required by the second gate driving circuit GOA2 is greater than the second high-voltage power supply voltage avdd2 of the second high-voltage power supply input end AVDD2, and a value range of an absolute value of a second negative power supply voltage VRGL2 required by the second gate driving circuit GOA2 is greater than the second high-voltage power supply voltage avdd2 of the second high-voltage power supply input end AVDD2.

For example, the second positive power supply voltage VRGH2 required by the second gate driving circuit GOA2 ranges from 5.5 V to 8.5 V, and the second negative power supply voltage VRGL2 required by the second gate driving circuit GOA2 ranges from -11 V to -7 V.

The driver chip DDIC is configured to provide the second positive power supply voltage VRGH2 and the second negative power supply voltage VRGL2 for the second gate driving circuit GOA2.

The configuration solution of the driver chip provided in this embodiment of this application further includes the second configuration solution. The second configuration solution may be applied to the high-voltage display device.

In the second configuration solution, the first voltage boost circuit 21 receives the second high-voltage power supply voltage avdd2 of the second high-voltage power supply input end AVDD2, and the second medium-voltage power supply voltage vci2 of the second medium-voltage power supply input end VCI2 and/or the second low-voltage power supply voltage vddi2 of the second low-voltage power supply input end VDDI2; boosts the second high-voltage power supply voltage avdd2 to generate a positive power supply voltage VGH; and transmits the positive power supply voltage VGH to the first voltage regulation circuit 22.

For example, the positive power supply voltage VGH=avdd+avdd/vci/vddi.

In a process in which the driver chip DDIC performs the second configuration solution, the first control end is configured to receive the first control signal to turn on the first voltage boost circuit 21.

The first voltage regulation circuit 22 regulates the positive power supply voltage VGH and then generates the second positive power supply voltage VRGH2, and outputs the second positive power supply voltage VRGH2 to the second gate driving circuit GOA2.

The negative voltage conversion circuit 31 receives the second high-voltage power supply voltage avdd2 of the second high-voltage power supply input end AVDD2, converts the received second high-voltage power supply voltage avdd2 into a negative second high-voltage power supply voltage avee2, and transmits the negative second high-voltage power supply voltage avee2 to the second voltage boost circuit 32.

The second voltage boost circuit 32 receives the negative second high-voltage power supply voltage avee2, the second medium-voltage power supply voltage vci2 of the second medium-voltage power supply input end VCI2, and/or the second low-voltage power supply voltage vddi2 of the second low-voltage power supply input end VDDI2; boosts the negative second high-voltage power supply voltage avee2 to generate a negative power supply voltage VGL; and transmits the negative power supply voltage VGL to the second voltage regulation circuit 33.

In the process in which the driver chip DDIC performs the second configuration solution, the second control end is configured to receive the second control signal, to turn on the second voltage boost circuit 32.

The second voltage regulation circuit 33 regulates the negative power supply voltage VGL and then generates the second negative power supply voltage VRGL2, and outputs the second negative power supply voltage VRGL2 to the second gate driving circuit GOA2.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A configuration solution of a driver chip in a display device, wherein
the driver chip comprises a first voltage boost circuit and a first voltage regulation circuit that are coupled, the first voltage boost circuit is configured to boost a received voltage and then transmit the boosted voltage to the first voltage regulation circuit, and the first voltage regulation circuit is configured to regulate the received voltage and then output the regulated voltage;
the configuration solution comprises a first configuration solution and a second configuration solution;
in the first configuration solution, the driver chip is configured to be used in a low-voltage display device; the low-voltage display device comprises a first circuit board, a first gate driving circuit, a first display screen, and a first direct path; the first circuit board comprises a first high-voltage power supply input end, a first medium-voltage power supply input end, and a first low-voltage power supply input end; the first voltage regulation circuit is coupled to the first high-voltage power supply input end through the first direct path; the first gate driving circuit is configured to provide a gate driving signal for a pixel driving circuit in the first display screen; and a first positive power supply voltage of the first gate driving circuit is less than a first high-voltage power supply voltage of the first high-voltage power supply input end;
the first high-voltage power supply input end, the first medium-voltage power supply input end, the first low-voltage power supply input end, and a first control end are all coupled to the first voltage boost circuit; and the first control end is configured to receive a first control signal, to turn orand turn off the first voltage boost circuit; and
the first voltage regulation circuit receives the first high-voltage power supply voltage of the first high-voltage power supply input end through the first direct path, regulates the first high-voltage power supply voltage, and then generates and outputs the first positive power supply voltage to the first gate driving circuit.

2. The configuration solution according to claim 1, wherein in a process in which the driver chip performs the first configuration solution, the first control end is configured to receive the first control signal, to turn off the first voltage boost circuit.

3. The configuration solution according to claim 1, wherein the driver chip comprises a first register, and the first register is configured to transmit the first control signal to the first control end.

4. The configuration solution according to any one of claims 1 to 3, wherein the first direct path comprises a first resistor.

5. The configuration solution according to claim 4, wherein the first resistor comprises a 0-ohm resistor.

6. The configuration solution according to any one of claims 1 to 3, wherein the first direct path comprises a first signal line.

7. The configuration solution according to any one of claims 1 to 6, wherein the first direct path is integrated into the driver chip or the first circuit board.

8. The configuration solution according to any one of claims 1 to 7, wherein the first circuit board further comprises a first capacitor, a second capacitor, and a first reference ground voltage end;
a first end of the first capacitor is coupled between the first voltage boost circuit and the first voltage regulation circuit, and a second end of the first capacitor is coupled to the first reference ground voltage end; and
a first end of the second capacitor is coupled between the first voltage regulation circuit and the first gate driving circuit, and a second end of the second capacitor is coupled to the first reference ground voltage end.

9. The configuration solution according to claim 8, wherein the driver chip comprises a first pin, a second pin, a third pin, a fourth pin, and a fifth pin, the first pin is coupled to the first high-voltage power supply input end, the second pin is coupled to the first medium-voltage power supply input end, the third pin is coupled to the first low-voltage power supply input end, the fourth pin is coupled to the first direct path and the first end of the first capacitor, and the fifth pin is coupled to a first positive power supply voltage end of the first gate driving circuit and the first end of the second capacitor.

10. The configuration solution according to any one of claims 1 to 9, wherein the driver chip further comprises a negative voltage conversion circuit, a second voltage boost circuit, and a second voltage regulation circuit that are sequentially coupled in series, the negative voltage conversion circuit is configured to convert the received first high-voltage power supply voltage into a negative first high-voltage power supply voltage and transmit the negative first high-voltage power supply voltage to the second voltage boost circuit, the second voltage boost circuit is configured to boost the negative first high-voltage power supply voltage and transmit the boosted voltage to the second voltage regulation circuit, and the second voltage regulation circuit is configured to regulate the received voltage and then output the regulated voltage;
the low-voltage display device further comprises a second direct path, the second voltage regulation circuit is coupled to the negative voltage conversion circuit through the second direct path, and an absolute value of a first negative power supply voltage of the first gate driving circuit is less than the first high-voltage power supply voltage; and
the first configuration solution further comprises:
the negative voltage conversion circuit receives the first high-voltage power supply voltage of the first high-voltage power supply input end, converts the received first high-voltage power supply voltage into the negative first high-voltage power supply voltage, and transmits the negative first high-voltage power supply voltage to the second voltage boost circuit and the second direct circuit;
the negative voltage conversion circuit, the first medium-voltage power supply input end, the first low-voltage power supply input end, and a second control end are all coupled to the second voltage boost circuit; and the second control end is configured to receive a second control signal, to turn on and turn off the second voltage boost circuit; and
the second voltage regulation circuit receives the negative first high-voltage power supply voltage through the second direct path, regulates the negative first high-voltage power supply voltage and then generates the first negative power supply voltage, and outputs the first negative power supply voltage to the first gate driving circuit.

11. The configuration solution according to claim 10, wherein in the process in which the driver chip performs the first configuration solution, the second control end is configured to receive the second control signal, to turn off the second voltage boost circuit.

12. The configuration solution according to claim 11, wherein the driver chip comprises a second register, and the second register is configured to transmit the second control signal to the second control end.

13. The configuration solution according to any one of claims 10 to 12, wherein the second direct path comprises a second resistor.

14. The configuration solution according to claim 13, wherein the second resistor comprises a 0-ohm resistor.

15. The configuration solution according to any one of claims 10 to 12, wherein the second direct path comprises a second signal line.

16. The configuration solution according to any one of claims 10 to 15, wherein the second direct path is integrated into the driver chip or the first circuit board.

17. The configuration solution according to any one of claims 10 to 16, wherein the first circuit board further comprises a third capacitor, a fourth capacitor, a fifth capacitor, and a second reference ground voltage end;
a first end of the third capacitor is coupled between the negative voltage conversion circuit and the second voltage boost circuit, and a second end of the third capacitor is coupled to the second reference ground voltage end;
a first end of the fourth capacitor is coupled between the second voltage boost circuit and the second voltage regulation circuit, and a second end of the fourth capacitor is coupled to the second reference ground voltage end; and
a first end of the fifth capacitor is coupled between the second voltage regulation circuit and the first gate driving circuit, and a second end of the fifth capacitor is coupled to the second reference ground voltage end.

18. The configuration solution according to claim 17, wherein the driver chip further comprises a sixth pin, a seventh pin, and an eighth pin, the sixth pin is coupled to the first end of the third capacitor and a first end of the second direct path, the seventh pin is coupled to the first end of the fourth capacitor and a second end of the second direct path, and the eighth pin is coupled to a first negative power supply voltage end of the first gate driving circuit.

19. The configuration solution according to any one of claims 1 to 18, wherein in the second configuration solution, the driver chip is configured to be used in a high-voltage display device; the high-voltage display device comprises a second circuit board, a second gate driving circuit, and a second display screen; the second circuit board comprises a second high-voltage power supply input end, a second medium-voltage power supply input end, and a second low-voltage power supply input end; the second gate driving circuit is configured to provide a gate driving signal for a pixel driving circuit in the second display screen; and a second positive power supply voltage of the second gate driving circuit is greater than a second high-voltage power supply voltage of the second high-voltage power supply input end;
the first voltage boost circuit receives the second high-voltage power supply voltage of the second high-voltage power supply input end, and a voltage of the second medium-voltage power supply input end and/or a voltage of the second low-voltage power supply input end; boosts the second high-voltage power supply voltage to generate a positive power supply voltage; and transmits the positive power supply voltage to the first voltage regulation circuit; and
the first voltage regulation circuit regulates the positive power supply voltage and then generates the second positive power supply voltage, and outputs the second positive power supply voltage to the second gate driving circuit.

20. The configuration solution according to claim 19, wherein in a process in which the driver chip performs the second configuration solution, the first control end is configured to receive the first control signal, to turn on the first voltage boost circuit.

21. The configuration solution according to any one of claims 10 to 20, wherein an absolute value of a second negative power supply voltage of the second gate driving circuit is greater than the second high-voltage power supply voltage; and
the second configuration solution further comprises:
the negative voltage conversion circuit receives the second high-voltage power supply voltage of the second high-voltage power supply input end, converts the received second high-voltage power supply voltage into a negative second high-voltage power supply voltage, and transmits the negative second high-voltage power supply voltage to the second voltage boost circuit;
the second voltage boost circuit receives the negative second high-voltage power supply voltage, and the voltage of the second medium-voltage power supply input end and/or the voltage of the second low-voltage power supply input end; boosts the negative second high-voltage power supply voltage to generate a negative power supply voltage; and transmits the negative power supply voltage to the second voltage regulation circuit; and
the second voltage regulation circuit regulates the negative power supply voltage and then generates the second negative power supply voltage, and outputs the second negative power supply voltage to the second gate driving circuit.

22. The configuration solution according to claim 21, wherein in the process in which the driver chip performs the second configuration solution, the second control end is configured to receive the second control signal, to turn on the second voltage boost circuit.

23. A display device, comprising a driver chip, wherein the driver chip is configured by using the configuration solution according to any one of claims 1 to 22, and the display device is a low-voltage display device or a high-voltage display device.
